**Europäisches Patentamt**

**European Patent Office**

**Office européen des brevets**

(19)

(11) Veröffentlichungsnummer: **0 274 577**
**B1**

# (12) EUROPÄISCHE PATENTSCHRIFT

(45) Veröffentlichungstag der Patentschrift:
**27.12.90**

(21) Anmeldenummer: **87114668.4**

(22) Anmeldetag: **08.10.87**

(51) Int. Cl.⁵: **G03B 21/64**

(54) **Mikrofilmlochkarte, insbesondere Kamerakarte.**

(30) Priorität: **16.12.86 DE 3642954**

(43) Veröffentlichungstag der Anmeldung:
**20.07.88 Patentblatt 88/29**

(45) Bekanntmachung des Hinweises auf die Patenterteilung:
**27.12.90 Patentblatt 90/52**

(84) Benannte Vertragsstaaten:
**CH DE FR GB IT LI NL**

(56) Entgegenhaltungen:
**DE-A- 1 922 918**
**DE-B- 1 288 560**
**DE-B- 1 292 625**
**GB-A- 2 110 418**
**US-A- 3 165 431**
**US-A- 3 177 600**

(73) Patentinhaber: **Datox-Organisation D. Schweinsberg GmbH & Co. KG, Postfach 1280, D-8633 Rödental(DE)**

(72) Erfinder: **Schweinsberg, Dieter, Gothaerstrasse 2, D-8631 Lautertal(DE)**

(74) Vertreter: **Patentanwälte Müller-Boré, Deufel, Schön, Hertel, Lewald, Otto, Isartorplatz 6, D-8000 München 2(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Zum Abspeichern von Informationen sind Verkleinerungen vom 20 bis etwa 40-fachen üblich. Verkleinert werden im wesentlichen Schriftstücke, Dokumente und Zeichnungen, um den Raumbedarf der Schriftgutablage und der Zeichnungsregistratur zu verringern. Hierbei sind Raumeinsparungen bis 98% möglich. Wertvolle Schriftstücke und Zeichnungen können auf wirtschaftliche Weise feuersicher archiviert, das Hantieren mit mir großformatigen Originalen vermieden werden. Informationen abspeichernde Datenträger sind vom magnetischen induktiven, aber insbesondere vom optischen Typ.

Hier hat sich die Mikrofilmlochkarte durchgesetzt. Mikrofilme werden in Ausschnitte von Lochkarten eingesetzt. Damit können die Filme aufgrund der in die Karten gelochten Angaben maschinell sortiert und herausgesucht werden, beispielsweise Mikrofilme von technischen Zeichnungen nach Zeichnungsnummer oder Patentdokumente nach Erteilungsnummer oder dergleichen.

Heutige Mikrofilmlochkarten tragen um einen Ausschnitt bzw. ein Fenster einen Rahmen. Zur Befestigung beispielsweise des von einem Rollenfilm geschnittenen Filmnegativs wird dieses bei einer sogenannten Kamerakarte nach Abzug eines Schutzpapiers beispielsweise gegen einen Kleberahmen befestigt. Daneben gibt es Mikrofilmlochkarten der verschiedensten Arten, u. a. auch mit aufgeklebtem Film.

Bisher war es so, daß mit der Kamera ein Film, insbesondere ein Rollenfilm, belichtet wurde; die Filme wurden nach dem Entwickeln geschnitten, ein Abdeckpapier bzw. Schutzpapier wurde vom Kleberahmen abgezogen und die Filmkarte bzw. allgemein ein Datenträger wurde unter Einhaltung von Normen aufgedrückt. Die Erfindung befaßt sich insbesondere mit Klebebändern, die in den Fensterausschnitt hineinreichen.

Unter anderem gibt es Kamerakarten, die dazu bestimmt sind, daß von ihnen Rückvergrößerungen gemacht werden.

Bei beiden Karten besteht das Problem, daß die Filme mit durchsichtigen Klebebändern eingeklebt werden.

Durch das durchsichtige aus bestimmten Gründen die Kartonkarten und den Film überlappende Klebeband (das eigentliche Bild befindet sich zentriert innerhalb des Films) ergaben sich bei der Rückvergrößerung zwangsweise schwarze Ränder. Zudem ist der Kopf der Kamera, die den Film anpreßt, um die Aufnahme zu machen, im Negativ und damit auf dem Abzug immer sichtbar.

Aber auch beim Lesen des Films ohne Rückvergrößerung wurde der Besucher vom (jetzt weiß strahlenden Film) immer geblendet. Mit Lesegeräten, zu dem automatisch ablesbare Informationen, waren auf solchen Mikrofilmlochkarten nur schwierig, meist nur an deren Rand oder sogar nur an dem sie beherbergenden Kasten unterzubringen.

Hier nun setzt die Erfindung ein.

Der Erfindung liegt die Aufgabe zugrunde, bei Mikrofilmlochkarten, allgemeiner bei Datenträgern, einerseits zu vermeiden, daß beim Lesen oder bei der Rückvergrößerung um den Film herum ein das Auge störender Rahmen bzw. eine Blendung auftritt und andererseits die Ausbildung einer solchen Mikrofilmlochkarte zum induktiven, optischen oder magnetischen Lesen von Informationen zu vereinfachen.

Erreicht wird dies bei einer Mikrofilmlochkarte gemäß einem der Ansprüche 1–3.

Durch die Maßnahme nach der Erfindung wird erreicht, daß einerseits bei Rückvergrößerung ein weißer Rand und kein schwarzer Rand vorhanden ist und bei dem Lesen der Mikrofilmkarte im Lesevergrößerungsgerät kein heller Rand das Auge stört und damit den Inhalt schwierig erkennbar macht. Gleichzeitig wird die Ausbildung der Mikrofilmlochkarte erheblich vereinfacht, da dem Klebebandrahmen eine neue Funktion gegeben wird, ohne daß die Mikrofilmlochkarte weitere Bestandteile außer Karte, Klebeband und Mikrofilmbild aufweisen müßte.

Nach einer bevorzugten Ausführungsform der Erfindung ist das Klebeband metallisiert. Für die optische Abtastung kann das Klebeband beschichtet sein und reflektieren.Das Klebeband trägt dann selbst eine optische Information.

Die Anwendung der Maßnahme nach der Erfindung ist auch allgemein auf magnetische Datenträger und magnetische Folien möglich. Hierbei ist das magnetische Band zur magnetischen Abtastung mit einer eisenhaltigen Substanz beschichtet.

Bei einer optischen Abtastung wendet man mit Aluminium beschichtete Klebebänder an.

Vorzugsweise kann der metallische oder metallisierte Klebebandrahmen als Informationsträger für Zählzwecke, Codierzwecke etc. dienen.

Anwendung findet die Maßnahme auch auf Duplizierkarten oder Diazokarten.

Es wird erheblich Toner eingespart, da der Rand nicht mehr entwickelt zu werden braucht und der Toner nicht in diese Bereiche kriechen muß, wo naturgemäß der meiste Toner verbraucht wird.

Rückvergrößerungen mit schwarzem Rand gibt es nicht mehr.

Die völlig undurchsichtigen Klebebänder belassen bei der Rückvergrößerung einen weißen Rand und verbrauchen keinerlei Toner.

Das bisherige Strahlen des weißen Randes im Lesegerät, ähnlich wie bei einer Leuchtstoffröhre, fällt fort. Der Informationsinhalt kann ohne Schwierigkeiten erkannt werden.

Die Anwendung ist auf alle möglichen Datenträger mit einmontierten Filmen, insbesondere Filmlochkarten, gegeben.

Ein zusätzlicher Vorteil ergibt sich bei der Lagerung und beim Transport bzw. bei der Handhabung. Bisher war nicht zu vermeiden, daß die Filme in den Filmlochkarten sich aufluden. Spätestens auf den Verarbeitungsmaschinen entstanden Verblitzungen, die die Qualität der Vergrößerungen erheblich beeinträchtigten.

Die Energie wird nunmehr elektrostatisch abgeleitet, so daß Verblitzungen nicht mehr zu erwarten sind. Elektrisch erfolgt also eine quasi-Neutralisation.

Neben den Zählzwecken kann die Maßnahme nach der Erfindung noch weiter ausgenutzt werden. Beispielsweise kann die Kamera abtasten, ob eine Karte in der Kamera liegt oder nicht. Dies wird über die im metallisierten Kleberahmen enthaltene Information möglich.

Schließlich ist es möglich, im Kleberahmen eine Information unterzubringen, die den Benützer darauf hinweist, wenn er eine ungeeignete Lesekarte, für die eine Rückvergrößerung also wenig aussichtsreich ist, eingelegt hat. Die Optik beim Lesen der Filmlochkarte, sei es im Original, sei es in der Vergrößerung, ist optimal.

Es wird nicht verkannt, daß es auf dem Gebiet der Mikrofilmlochkarten einen umfangreichen Stand der Technik gibt, keinen jedoch, der sich die der Erfindung zugrundeliegende Aufgabe gestellt und deren Lösung angeboten hätte, da entweder das Problem nicht erkannt oder eine Lösung nicht vorstellbar war.

So beschreibt die US-PS 3 165 431 eine Mikrofilmlochkarte mit Metallfolienrahmen und einem wärmeempfindlichen Klebstoff, wobei die Randteile des Films gegen den Folienrahmen gepreßt werden und der Metallfolienrahmen induktiv erhitzt wird, um den Klebstoff zu aktivieren. Hierdurch erfolgt das Verkleben mit dem Rahmen. Der Rahmen ist dort aus leitfähigen metallischen Materialien hergestellt, um Strom zu leiten und die induktive Erwärmung herbeizuführen. Wichtig ist es dort, den mit Klebstoff beschichteten Träger, der ja kein Klebeband im heutigen Sinne ist und auch nicht klebt, genau zu positionieren. Erst nach der ganz genauen Positionierung um das Fenster herum wird der Klebstoff durch induktive Wärme aktiviert. Die Maßnahme läßt sich offensichtlich nur bei einem Großhersteller für Mikrofilmlochkarten anwenden, der über ein Induktivheizgerät und Kartenpositioniergerät verfügt. Auch ist nicht zu verkennen, daß bei einem solchen Verfahren der Film ganz erheblich leidet, da er ebenfalls Wärme und Druck ausgesetzt wird.

Es wird ferner nicht verkannt, daß es bei fotographischen Diarähmchen bekannt ist, die Dias dadurch zu identifizieren, daß stirnseitig ein Codierstreifen, also senkrecht zur Diahülle, aufgeklebt ist. Es handelt sich um einen Mylarfilm mit reflektierender Oberfläche. Der Streifen ist beidseitig mit Klebstoff beschichtet, um nicht reflektierende Elemente aufzunehmen. Die Codierplatte kann zwar aus Aluminiumblech beispielsweise hergestellt sein, ein Klebebandrahmen, eine Mikrofilmlochkarte und die Ausbildung des Klebebandrahmens zum Ablesen von Informationen ist dort sicher nicht geschildert (US-PS 3 784 296).

Auch ein hinsichtlich der Beschädigung der Mikrofilme wenig günstiger Vorschlag (US-PS 2 587 022) löst das der Erfindung zugrundeliegende Problem nicht. Dort werden thermoplastische Materialien über das Loch in eine Mikrofilmkarte gespannt und hierauf das Mikrofilmbild aufgeklebt oder in einen Ausschnitt hiervon eingeklebt. Der Klebebandrahmen besteht selbst aus einem thermoplastischen Film, der wieder durch eine Heizeinrichtung seine Klebeigenschaften erst entfaltet. Die Aufgabe ist dort, zunächst so auf den Karton der Lochkarte zu pressen, daß diese im Bereich des Fensters vertieft ist und hierein dann die Folie zu kleben. Das thermoplastische Material ist im allgemeinen durchsichtig und kann für Sonderfälle (es werden auch nach diesem Verfahren Bilder, Pappe, Papier oder dergleichen als "Bild" eingeklebt) undurchsichtig sein, allerdings wird die Undurchsichtigkeit als Nachteil angesehen und nur darum zugelassen, weil die undurchsichtige Folie nur wenig verdeckt.

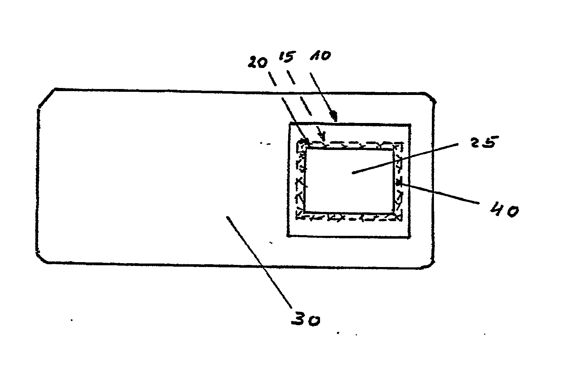

Eine beispielsweise Ausführungsform der Erfindung soll nun mit bezug auf die beiliegende Zeichnung näher erläutert werden. Diese zeigt eine Lochkarte 30, beispielsweise aus Karton, einen Fensterausschnitt 15 in der Mikrofilmlochkarte, bei 20 die Begrenzung der Mikrofilmbefestigung und bei 40 das metallisierte Klebeband.

Nach Abziehen eines Schutzfilms kann das Mikrofilmbild 25 eingedrückt bzw. gegen den Kleberahmen verklebt werden, und zwar so, daß die Normbedingungen (die Dicke der Lochkarte einschließlich des Mikrofilms mit seiner Befestigung darf die Dicke der Lochkarte um nicht mehr als 0,006 bei Mikrofilmlochkarten mit Kleberahmen überschreiten) eingehalten werden.

## Patentansprüche

1. Mikrofilmlochkarte (30), insbesondere Kamerakarte, bestehend aus einer Filmlochkarte aus Karton, einem Ausschnitt (15) bzw. Fenster in dieser Karte, einem Klebeband (40), das um den Fensterausschnitt herum verläuft und einem auf das Klebeband geklebten Mikrofilmbild (25), dadurch gekennzeichnet, daß das Klebeband (40) undurchsichtig ist und induktiv lesbar ist und Information tragen kann.

2. Mikrofilmlochkarte (30), insbesondere Kamerakarte, bestehend aus einer Filmlochkarte aus Karton, einem Ausschnitt (15) bzw. Fenster in dieser Karte, einem Klebeband (40), das um den Fensterausschnitt herum verläuft und einem auf das Klebeband geklebten Mikrofilmbild (25), dadurch gekennzeichnet, daß das Klebeband (40) optisch lesbar undurchsichtig und reflektierend beschichtet ist und selbst eine optische Information tragen kann.

3. Mikrofilmlochkarte (30), insbesondere Kamerakarte, bestehend aus einer Filmlochkarte aus Karton, einem Ausschnitt (15) bzw. Fenster in dieser Karte, einem Klebeband (40), das um den Fensterausschnitt herum verläuft und einem auf das Klebeband geklebten Mikrofilmbild (15), dadurch gekennzeichnet, daß das Klebeband (40) magnetisch lesbar, undruchsichtig und für die magnetische Abtastung mit einer eisenhaltigen Substanz beschichtet ist.

4. Mikrofilmlochkarte nach einem der vorhergehenden Ansprüche, dadurch gekennzeichnet, daß das Klebeband metallisiert ist.

5. Mikrofilmlochkarte nach Anspruch 1, dadurch gekennzeichnet, daß das Klebeband metallisch ist.

6. Mikrofilmlochkarte nach Anspruch 2, dadurch gekennzeichnet, daß bei optischer Abtastung das Klebeband mit Aluminium beschichtet ist.

7. Mikrofilmlochkarte nach einem der vorhergehenden Ansprüche, dadurch gekennzeichnet, daß das Klebeband als Informationsträger für Zählzwecke und Codierzwecke ausgebildet ist.

## Claims

1. Microfilm aperture card (30), in particular a camera card, consisting of a film aperture card made of card-board, an aperture cutout (15) or window in said card, an adhesive tape (40) extending around the window cutout and a microfilm picture (25) stuck onto the adhesive tape, characterized in that the adhesive tape (40) is opaque and is inductively readable and can carry information.

2. Microfilm aperture card (30), in particular a camera card, consisting of a film aperture card made of cardboard, an aperture cutout (15) or window in said card, an adhesive tape (40) extending around the window cutout and a microfilm picture (25) stuck onto the adhesive tape, characterized in that the adhesive tape (40) is optically readable, opaque and is reflectingly coated and itself is able to carry optical information.

3. Microfilm aperture card (30), in particular a camera card, consisting of a film aperture card made of card-board, an aperture cutout (15) or window in said card, an adhesive tape (40) extending around the window cutout and a microfilm picture (25) stuck onto the adhesive tape, characterized in that the adhesive tape (40) is magnetically readable, is opaque and for magnetic scanning is coated with an iron-containing substance.

4. Microfilm aperture card according to any one of the preceding claims, characterized in that the adhesive tape is metallized.

5. Microfilm aperture card according to claim 1, characterized in that the adhesive tape is metallic.

6. Microfilm aperture card according to claim 2, characterized in that for optical scanning the adhesive tape is coated with aluminium.

7. Microfilm aperture card according to any one of the preceding claims, characterized in that the adhesive tape is made up in the form of an information carrier for counting purposes and coding purposes.

## Revendications

1. Carte perforée à fenêtre pour microfilm (30), en particulier carte-photo, constituée d'une carte perforée en carton, d'une découpure ou fenêtre (15) aménagée dans cette carte, d'une bande adhésive (40) qui court tout autour de la fenêtre, et d'une image microfilm (25), collée sur la bande adhésive, caractérisée en ce que la bande adhésive (40) et non-transparente, est lisible par induction et peut porter des informations.

2. Carte perforée à fenêtre pour microfilm (30), en particulier carte-photo, consitutée d'une carte perforée en carton, d'une découpure ou fenêtre (15) aménagée dans cette carte, d'une bande adhésive (40) qui court tout autour de la fenêtre, et d'une image microfilm (25), collée sur la bande adhésive, caractérisée en ce que la bande adhésive (40) est lisible par un moyen optique, est non-transparente et est garnie d'un revêtement réfléchissant, et peut elle-même porter une information optique.

3. Carte perforée à fenêtre pour microfilm (30), en particulier carte-photo, constituée d'une carte perforée en carton, d'une découpure ou fenêtre (15) aménagée dans cette carte, d'une bande adhésive (40) qui court tout autour de la fenêtre, et d'une image microfilm (25), collée sur la bande adhésive, caractérisée en ce que la bande adhésive (40) peut être lue par un moyen magnétique, est non-transparente et, pour la lecture magnétique, est enduite d'une substance contenant du fer.

4. Carte perforée à fenêtre pour microfilm selon l'une des revendications précédentes, caractérisée en ce que la bande adhésive est métallisée.

5. Carte perforée à fenêtre pour microfilm selon la revendication 1, caractérisée en ce que la bande adhésive est métallique.

6. Carte perforée à fenêtre pour microfilm selon la revendication 2, caractérisée en ce que, en lecture optique, la bande adhésive est enduite d'aluminium.

7. Carte perforée à fenêtre pour microfilm selon l'une des revendications précédentes, caractérisée en ce que la bande adhésive est conçue comme un support d'informations pour comptage et codage.